# EUROPÄISCHE PATENTSCHRIFT

(11) **EP 3 453 238 B1**
(45) Veröffentlichungstag und Bekanntmachung des Hinweises auf die Patenterteilung: **14.10.2020**
(21) Anmeldenummer: 18190113.3
(22) Anmeldetag: 22.08.2018
(51) Int. Cl.: A01B 73/06, A01B 49/06

(54) **GEZOGENES LANDWIRTSCHAFTLICHES ARBEITSGERÄT**
PULLED AGRICULTURAL DEVICE
ENGIN AGRICOLE TRACTÉ

(30) Priorität: 11.09.2017 DE 102017120948
(43) Veröffentlichungstag der Anmeldung: 13.03.2019
(73) Patentinhaber: Horsch Maschinen GmbH, 92421 Schwandorf (DE)
(72) Erfinder: HORSCH, Michael, 92421 Schwandorf (DE)
(74) Vertreter: Benninger, Johannes

(56) Entgegenhaltungen:
- EP-B1- 1 935 224
- WO-A1-00/74464
- DE-A1- 19 943 277
- DE-A1-102006 060 278
- DE-A1-102012 110 178
- US-A1- 2017 006 762

## Beschreibung

Die vorliegende Erfindung betrifft ein gezogenes landwirtschaftliches Arbeitgerät.

Aus der Druckschrift DE 10 2012 110 178 A1 ist ein gezogenes landwirtschaftliches Arbeitsgerät, insbesondere Bodenbearbeitungs- und/oder Sägerät, mit einem ein Laufwerk und eine Zugvorrichtung aufweisenden Zentralrahmen, an welchem im hinteren Bereich ein Schwenkrahmen und sich seitlich zu diesem erstreckende Seitenrahmen angebracht sind, wobei an den Seitenrahmen über die gesamte Breite in regelmäßigen Abständen zueinander angeordnete bzw. sich erstreckende Säelemente angebracht sind, wobei der Schwenkrahmen und die sich seitlich zu diesem erstreckenden Seitenrahmen gegenüber dem Zentralrahmen um eine sich quer zu einer Fahrtrichtung erstreckende Drehachsemittels zumindest eines Stellmittels nach oben verschwenkbar sind, und wobei die Seitenrahmen jeweils um eine sich etwa in ihrem Endbereich befindende Gelenkachse, die in der nach oben verschwenkten Stellung des Schwenkrahmens aufrecht verläuft, nach vorne oder hinten in eine in Fahrtrichtung verlaufende Position verschwenkbar sind.

Ein ähnliches landwirtschaftliches Arbeitsgerät geht bspw. aus der EP 1 935 224 B1 bereits hervor. Um dieses bekannte Arbeitsgerät aus einer Arbeitsposition in eine Transportposition zu überführen, ist vorgesehen, dass an einem Zentralrahmen sich seitlich zu diesem erstreckende Seitenrahmen angebracht sind, wobei diese Seitenrahmen zunächst um eine horizontale und sich quer zur Fahrtrichtung erstreckende Achse um etwa 90° nach oben verschwenkt werden, wonach die Seitenrahmen anschließend um eine in der verschwenkten Stellung aufrecht verlaufende Achse um etwa 90° nach vorne in eine parallel zur Fahrtrichtung verlaufende Position verschwenkt werden. Um eine konstante Tiefenführung von an den Seitenrahmen angebrachten Säelementen zu erhalten, weisen die Seitenrahmen zudem in ihrem äußeren Bereich ein Tiefenführungselement in Form einer Tiefenführungsrolle auf. Sowohl während einer Arbeitsposition als auch in einer Vorgewendeposition sind die Seitenrahmen jeweils derartig verschwenkt, dass eine Abstützung des Arbeitsgerätes mittels der Tiefenführungsräder und den dem Zentralrahmen zugeordneten Laufrädern erfolgt. Da die Tiefenführungsräder und die Laufräder sich jedoch nicht über die gesamte Arbeitsbreite des landwirtschaftlichen Arbeitsgerätes erstrecken, ergeben sich für die nachgeordneten Säelemente jeweils unterschiedliche Arbeitsbedingungen, welche das jeweilige Arbeitsergebnis negativ beeinflussen können. Zudem sind für die Tiefenführungsräder jeweils separate Hydraulikzylinder erforderlich, um die Tiefenführungsräder zusätzlich zwischen einer Arbeitsposition und einer Transportposition verschwenken zu können, was wiederum entsprechend kostenintensiv und aufwendig ist.

Durch die DE 199 43 277 A1 ist eine Säkombination mit einem über einen Kuppelrahmen an einer Zugdeichsel befestigten Tragrahmen offenbart. Die Säkombination umfasst einen Vorratsbehälter zum Mitführen und Bevorraten von Verteilgut. Am Tragrahmen ist eine Sävorrichtung mit Säscharen und Tiefenführungsrollen angebracht. Die Tiefenführungsrollen können insbesondere durch nebeneinander und versetzt zueinander angeordnete und höhenverstellbare Packerwalzenräder gebildet sein. In Fahrtrichtung hinter den Packerwalzenrädern sind jeweils zwei Säschare vorgesehen, so dass sie in den von den Packerwalzenrädern verfestigen Boden Saatfurchen ziehen, in denen das aus dem Vorratsbehälter von der Dosiereinrichtung dosierte Material über die Saatleitung in die Säfurchen abgelegt wird. Während in Fahrtrichtung vor der Sävorrichtung eine Bodenbearbeitungsvorrichtung mit Bodenbearbeitungswerkzeugen in Form von Schleppzinken angeordnet ist, ist in Fahrtrichtung hinter der Sävorrichtung ein Striegel vorgesehen.

Um die Sävorrichtung beim Wenden am Feldende aus dem Boden zu heben bzw. auf Straßen und Wegen transportieren zu können, wird über einen Dreipunktkraftheber die Zugdeichsel angehoben. Gleichzeitig werden die Laufräder des Fahrwerks gegenüber dem Rahmen abgesenkt, so dass die Sävorrichtung vom Boden abgehoben wird. Auf diese Weise kommen die Bodenbearbeitungswerkzeuge, die Walzenräder, die Säschare und der Striegel vom Boden frei bzw. in eine angehobene Position. Eine derartige Lösung hat sich jedoch dahingehend als nachteilig erwiesen, dass auch im Vorgewende eine Abstützung des Tragrahmens über das Fahrwerk erfolgt, wodurch der Wendevorgang der Säkombination deutlich eingeschränkt wird.

Durch die EP 1 529 430 A1 ist ein weiteres landwirtschaftliches Bodenbearbeitungsgerät offenbart. Das Bodenbearbeitungsgerät umfasst eine Schleppeinrichtung und einen Zentralbereich, welcher drehbar in Lagern der Schleppeinrichtung um eine im Wesentlichen horizontale Achse gestützt ist. Der Zentralbereich ist so angeordnet, dass er im Wesentlichen um 90 Grad zwischen einer Arbeitsposition und einer Transportposition gedreht wird. Zudem umfasst das Bodenbearbeitungsgerät zumindest einen äußeren Bereich, der in Lagern des Zentralbereichs drehbar um eine Achse gestützt ist, die in der Arbeitsposition im Wesentlichen horizontal ist und die in der Transportposition im Wesentlichen vertikal ist. Dem äußeren Bereich ist eine Vielzahl von Bodenbestelleinheiten zugeordnet, wobei zumindest eine der Bodenbestelleinheiten zwischen einer Arbeitsposition und einer Transportposition bewegbar ist.

Der Erfindung liegt die Aufgabe zugrunde, ein gezogenes landwirtschaftliches Arbeitsgerät, insbesondere ein Bodenbearbeitungs- und/oder Sägerät großer Arbeitsbreite zu schaffen, bei welchem über die gesamte Arbeitsbreite weitgehend oder annähernd gleich bleibende Bedingungen geschaffen werden, womit insbesondere die Bodenbearbeitungs- und/oder Säbedingungen gemeint sind.

Diese Aufgabe wird erfindungsgemäß durch den Gegenstand mit den Merkmalen des Anspruchs 1 gelöst, wobei weitere vorteilhafte Ausgestaltungen und Weiterbildungen der Erfindung in den abhängigen Ansprüchen angegeben sind.

Zur Lösung der genannten Aufgaben schlägt die Erfindung ein gezogenes landwirtschaftliches Arbeitsgerät, insbesondere ein Bodenbearbeitungs- und/oder Sägerät vor, welches zur landwirtschaftlichen Bodenbearbeitung und/oder zur Aussaat oder zum Ausbringen von festen und/oder flüssigen Verteilgütern dient. Das Arbeitsgerät umfasst einen Zentralrahmen zum Tragen der an dem Arbeitsgerät vorhandenen Komponenten, wie bspw. einen Vorratsbehälter zum Mitführen und Bereitstellen des jeweiligen Verteilgutes (Dünger, Saatgut etc.) sowie eine am vorderen Ende des Zentralrahmens (in Fahrtrichtung gesehen) angebrachte Zugvorrichtung zum Verbinden des Arbeitsgeräts mit einem landwirtschaftlichen Zugfahrzeug. Zum Transport des Arbeitsgeräts weist dieses darüber hinaus ein Laufwerk auf, welches bspw. aus zwei Laufrädern oder ggf. auch vier Laufrädern (in Tandemachs- oder Zwillingsachs-Anordnung) oder aus Raupenfahrwerken oder dergl. bestehen kann.

Um große Arbeitsbreiten des Arbeitsgerätes realisieren zu können, befindet sich am hinteren Bereich des Zentralrahmens ein Schwenkrahmen, an welchem sich seitlich zu diesem erstreckende Seitenrahmen angebracht sind. Die Seitenrahmen sind darüber hinaus derartig ausgeführt, dass sie in einer Arbeitsposition die gesamte Arbeitsbreite des landwirtschaftlichen Arbeitsgerätes umfassen bzw. abdecken. Zudem sind der Schwenkrahmen und die sich seitlich zu diesem erstreckenden Seitenrahmen gegenüber dem Zentralrahmen um eine sich quer zur Fahrtrichtung erstreckende Drehachse mittels zumindest eines motorischen Stellmittels nach oben, bspw. um ca. 90° nach oben verschwenkbar. Außerdem sind die Seitenrahmen jeweils um eine sich etwa in ihrem Endbereich befindende Schwenkachse, die in der nach oben verschwenkten Stellung des Schwenkrahmens aufrecht verläuft, nach vorne oder hinten mittels bspw. eines Linearantriebes in eine in Fahrrichtung verlaufende Position verschwenkbar. Insbesondere werden die Seitenrahmen um ca. 90° bzw. um 90° nach vorne verschwenkt, so dass diese sich in dieser nach oben geklappten Schwenkposition, zusammen mit den am Seitenrahmen angebrachten Tiefenführungselementen und Säelementen, jeweils links und rechts neben einem am Zentralrahmen angebrachten Vorratsbehälter erstrecken und zudem vorzugsweise oberhalb des Laufwerks verlaufen.

Um über die gesamte Arbeitsbreite des Arbeitsgerätes für die jeweilige Bodenbearbeitung und/oder Verteilung von Verteilgut die gleichen Bedingungen zu schaffen, ist gegenüber dem Stand der Technik vorgesehen, dass an den Seitenrahmen wiederum über die gesamte Breite dieser Seitenrahmen in regelmäßigen Abständen zueinander angeordnete Tiefenführungselemente und Säelemente vorhanden sind.

Um die gleichen Bedingungen noch weiter zu verbessern, ist zudem vorgesehen, dass in einer Arbeitsposition und in einer Vorgewendeposition bzw. in einer ausgehobenen Position, der Schwenkrahmen mittels des Stellmittels derartig verschwenkt wird, dass eine Tiefenführung und eine Abstützung des Arbeitsgerätes ausschließlich mittels der Tiefenführungselemente erfolgt, sowie dass in einer Transportposition der Schwenkrahmen mittels des Stellmittels derartig verschwenkt wird, dass eine Abstützung des Arbeitsgeräts lediglich mittels des Laufwerks erfolgt. Durch die somit erreichte Abstützung und Tiefenführung des Arbeitsgerätes über die gesamte Arbeitsbreite kann während einer Feldarbeit eine weitaus bessere Gewichts- und Lastenverteilung des Arbeitsgerätes erreicht werden. Konkret kann dies bedeuten, dass das Fahrwerk bzw. die Laufräder des Fahrwerks nur während einer Transportposition mit einer Bodenoberfläche in Kontakt ist/sind, während hingegen das Fahrwerk bzw. die Laufräder des Fahrwerks bei einer Arbeits- und Vorgewendeposition angehoben ist/sind und keinen Kontakt mit einer Bodenoberfläche hat/haben. Auf diese Weise kann gegenüber den im Stand der Technik bekannten Lösungen ein besseres Wendeverhalten erreicht werden. Dies wird insbesondere dadurch erreicht, dass beim Vorwegwende auf der gesamten Packerwelle geschwenkt wird, während es hingegen im Stand der Technik erforderlich ist, dass beispielsweise die Achse der Laufräder des Fahrwerks mit der Achse der Frontstützräder auf einer Ebene liegen um keine ungewollten Spuren, Längsrillen oder dergl. Bereiche mit unterschiedlichen Höhenniveaus und/oder stark unterschiedlicher Bodenverdichtung zu erzeugen.

Mittels des zumindest einen Stellmittels wird der Schwenkrahmen somit jeweils um die quer zur Fahrtrichtung orientierte Drehachse derartig verschwenkt, dass in einer Arbeitsposition sowohl die Tiefenführungselemente als auch die Säelemente mit einer Bodenoberfläche in Kontakt stehen, die Tiefenführung und die Abstützung des Arbeitsgeräts somit also mittels der Tiefenführungselemente erfolgt, wohingegen die Laufräder bzw. das Laufwerk in dieser Stellung keinen Bodenkontakt aufweist/aufweisen.

In einer ausgehobenen Position, welche bspw. am Vorgewende erforderlich ist, wird hingegen mittels des zumindest einen Stellmittels der Schwenkrahmen derartig verschwenkt, dass lediglich die Tiefenführungselemente mit einer Bodenoberfläche in Kontakt stehen und dass somit die Abstützung des Arbeitsgerätes lediglich mittels der Tiefenführungselemente erfolgt, und die Laufräder bzw. das Laufwerk auch in dieser Stellung keinen Bodenkontakt aufweist/aufweisen.

Bei der Überführung des Arbeitsgerätes aus der Arbeitsposition bzw. der Vorgewendeposition in die Transportposition wird der Schwenkrahmen mittels des wenigstens einen Stellmittels derartig verschwenkt, dass lediglich das Laufwerk bzw. deren Laufräder oder Raupenfahrwerke mit einer Bodenoberfläche in Kontakt stehen.

Das zumindest eine motorische Stellmittel kann insbesondere zwischen dem Zentralrahmen und dem Schwenkrahmen angebaut sein, und hydraulisch und/oder pneumatisch und/oder elektrisch betrieben werden. Insbesondere kann das zumindest eine Stellmittel als Zylinder oder Linearantrieb oder Spindeltrieb oder dergl. ausgeführt sein. Auch können bspw. hydraulische oder pneumatische Stellmittel verwendet werden, welche von einer elektrischen Steuerung oder einem elektrisch betätigten Ventil angesteuert werden.

Mittels des Stellmittels kann der Schwenkrahmen jeweils um die quer zur Fahrrichtung orientierte Drehachse derartig verschwenkt werden, dass in einer Arbeitsposition sowohl die Tiefenführungselemente als auch die diesem nachgeordneten Säelemente mit einer Bodenoberfläche in Kontakt stehen, d.h. die Tiefenführung und die Abstützung des Arbeitsgerätes können somit mittels der Tiefenführungselemente erfolgen, wohingegen die Laufräder keinen Bodenkontakt aufweisen. Außerdem kann dadurch erreicht werden, dass in einer ausgehobenen Vorgewendeposition lediglich die Tiefenführungselemente mit einer Bodenoberfläche in Kontakt stehen, so dass somit die Abstützung des Arbeitsgeräts lediglich mittels der Tiefenführungselemente erfolgt.

Zudem kann erreicht werden, dass in einer Transportposition lediglich die Laufräder des Laufwerks in Bodenkontakt stehen, d.h. die Abstützung des Arbeitsgerätes kann lediglich mittels der Laufräder bzw. mittels des Laufwerks erfolgen.

Dadurch, dass ein Verschwenken des Schwenkrahmens lediglich mittels zumindest eines Stellmittels erfolgt und darüber hinaus keine weiteren Stellmittel erforderlich sind, ergibt sich zudem ein wesentlich vereinfachter Aufbau des Arbeitsgerätes gegenüber den aus dem Stand der Technik bekannt gewordenen gezogenen landwirtschaftlichen Arbeitsgeräten.

Um den Schwenkrahmen mittels des zumindest einen Stellmittels jeweils in die korrekte Position zu verschwenken, können am Arbeitsgerät bspw. Positionssensoren oder Winkelsensoren angebracht sein, welche jeweils eine Position zwischen dem Schwenkrahmen und dem Zentralrahmen erfassen. Auch können am zumindest einen Stellmittel Positionssensoren angebracht sein, mittels derer die jeweilige Position bzw. Länge bzw. der Verfahrweg des Stellmittels erfasst wird. Auch Winkelpotentiometer oder sonstige Messmittel sind denkbar und verwendbar. Die somit mittels der Messmittel erfassten Positions- bzw. Winkelwerte werden anschließend mittels einer geeigneten Steuerung verarbeitet und das zumindest eine Stellmittel entsprechend angesteuert bzw. geregelt. Hierbei kann es sich insbesondere um eine elektronische Steuerung handeln, die die empfangenen Positionssignale von den Sensoren verarbeitet und daraus entsprechende Stellsignale für Aktoren zum Verstellen der schwenkbaren Maschinenteile ableitet.

Es sei angemerkt, dass der Begriff "Steuerung" als Oberbegriff für jegliche Art der Einflussnahme auf das zumindest eine Stellmittel verstanden wird, wobei der Begriff "Steuerung" auch eine "Regelung" (im engeren Wortsinne) umfassen kann, da eine Regelung eine Steuerung mit einer Rückkopplung einer der gesteuerten Größen ist. Die Steuerung kann somit auch als Regler, insbesondere zur Regelung des Stellmittels, ausgeführt sein. Zudem kann die Steuerung als elektrische oder hydraulische oder pneumatische oder als elektropneumatische oder elektrohydraulische Steuerung ausgeführt sein. Zudem kann die Steuerung auch ein Steuerungsprogramm umfassen, welches bspw. in einem Steuerungsrechner hinterlegt ist.

Als Tiefenführungselemente können jegliche aus dem Stand der Technik bekannt gewordene Packerwalzen bzw. Ackerwalzen verwendet werden, wobei insbesondere eine aus Rädern gebildete Packerwalze verwendet wird bzw. verwendet werden kann. Auch wären Packerwalzen aus Stahlringen oder Kunststoffringen oder Gummiringen oder dergl. denkbar. Die Packerwalzen bzw. Ackerwalzen können wahlweise jeweils ein- oder mehrteilig ausgeführt sein und sich jeweils entlang der gesamten Länge bzw. Breite der Seitenrahmen erstrecken.

Um möglichst wenige Aktoren zu benötigen, können die Tiefenführungselemente zudem starr mit dem jeweiligen Seitenrahmen verbunden sein, wobei starr hierbei insbesondere bedeutet, dass diese in Ihrer Höhe nicht verstellbar sind; diese könnten jedoch auch mittels eines Gelenks in deren Höhe in Bezug auf den Seitenrahmen verstellbar sein.

Eine weitere Variante des erfindungsgemäßen landwirtschaftlichen Arbeitsgerätes kann vorsehen, dass dessen die Tiefenführungselemente bildende einteilige oder mehrteilige Packerwalze und/oder Ackerwalze durch eine Mehrzahl von mit ihren Drehachsen in etwa fluchtenden und jeweils in definiertem Abstand voneinander angeordneten und drehbar gelagerten Rädern gebildet ist. Diese Gestaltungsvariante weist den besonderen Vorteil der sehr gleichmäßig zu gestaltenden Bodenbedingungen für die Vielzahl der dieser Packer- oder Ackerwalze folgenden Säaggregate auf, die dadurch, dass sie allesamt den Rädern folgen, jeweils gleiche Bedingungen hinsichtlich der Bodenstruktur (Lockerung oder leichte Vorverfestigung) vorfinden. Hierzu ist es von Vorteil, wenn zumindest einigen Rädern, insbesondere jedem Rad der Packerwalze oder Ackerwalze mindestens ein Säelement folgt. Vorzugsweise jedoch folgen zumindest einigen Rädern, insbesondere jedem Rad der Packerwalze oder Ackerwalze jeweils zwei Säelemente. Da bei dieser bevorzugten Ausführungsvariante zwei Säelemente jeweils einem Rad der Packerwalze oder Ackerwalze folgen und diese beiden Säelemente oder Säaggregate zudem jeweils in etwa einem linken bzw. rechten Randbereich des Rads zugeordnet sind bzw. folgen, ergeben sich insgesamt optimierte Bedingungen für alle Säelemente oder Säaggregate, die zudem über die gesamte Maschinenbreite in etwa gleich sind, da die seitlichen Randbereiche des Abrollbereichs jedes Rads aufgrund der Reifenverformung und des Walkens der Räder in recht genau vorhersagbarer und durch die Reifenelastizitäten und Luftdrücke in den Rädern auch in Maßen beeinflussbarer Bodendruck und Verfestigungseffekt, was der vorhersagbaren und einstellbaren Verfestigung des Bodens für die nachfolgenden Säaggregate oder Säelemente zugute kommt. Wenn im vorliegenden Zusammenhang von Rädern die Rede ist, so sind damit normalerweise die kompletten Laufräder, bestehend jeweils aus Stahlrädern - diese wiederum umfassend jeweils die Felge und den Radkranz - und auf die Felgen aufgezogenen Luftreifen gemeint.

Als Säelemente können jegliche Arten von in der Landwirtschaft bekannt gewordenen Säscharen oder Zinkenscharen oder dergl. Verwendung finden. Zudem könnten sog. Einzelkornschare oder Doppelscheibenschare oder Einscheibenschare verwendet werden. Auch Zinkenschare oder Schleppschare wären denkbar. Auch diese könnten wiederum starr oder in deren Höhe verstellbar mit dem Seitenrahmen verbunden sein. Auch können diese bspw. mittels eines Parallelogramms mit dem Seitenrahmen verbunden sein.

Gemäß einem Ausführungsbeispiel können die Tiefenführungselemente gegenüber dem Seitenrahmen starr, insbesondere nicht höhenverstellbar, ausgebildet sein, während hingegen die Säelemente beispielsweise über eine Gelenkanordnung höhenverstellbar zum Seitenrahmen angeordnet sind. Die Höhenverstellung der Säelemente kann beispielsweise mittels als Hydraulikzylinder ausgebildeten Einstellorganen erfolgen.

Alternativ können neben den Säelementen auch die Tiefenführungsräder gegenüber dem Seitenrahmen höhenverstellbar ausgebildet sein. Wahlweise könnten auch nur die Tiefenführungsräder gegenüber dem Seitenrahmen höhenverstellbar ausgebildet sein, während die Säschare starr bzw. nicht höhenverstellbar ausgebildet sind.

Die Anordnung der Tiefenführungselemente und der Säelemente ist insbesondere derartig, dass die Tiefenführungselemente vor den Säelementen angeordnet sind. Zudem kann jeweils ein Säelement bspw. einem Packerring bzw. einem Walzenring folgen. Auch kann vorgesehen sein, dass bei der Ausführung der Tiefenführungselemente als Rad jeweils einem Rad zwei Säelemente folgen, welche insbesondere in einem äußeren Bereich der durch die Räder erzeugten Furchen geführt werden, durch eine derartige Anordnung entspricht bspw. die Anzahl an Räder der Hälfte der Anzahl an Säelementen.

Gemäß einem Ausführungsbeispiel können die Tiefenführungselemente insbesondere in Fahrtrichtung vorgeordnet und die Säelemente in Fahrtrichtung dem Seitenrahmen nachgeordnet sein. Dies kann bedeuten, dass jedem Tiefenführungselement jeweils ein Säelement zugeordnet, insbesondere in Fahrtrichtung nachgeordnet ist. Durch eine derartige Zuordnung können über die gesamte Arbeitsbreite an allen Säscharen die gleichen (Sä-)Bedingungen geschaffen werden.

Um sowohl die Tiefenführungselemente als auch die Säelemente über die gesamte Arbeitsbreite anordnen zu können und zudem ein Arbeitsgerät mit kompakt bauenden Transportmaßen zu erreichen, sind die Seitenrahmen und die an diesen angeordneten Tiefenführungselemente und Säelemente in der Transportposition vorzugsweise oberhalb des Laufwerkes angeordnet, wobei um dies zu erreichen, die Durchmesser des Laufwerks bzw. der Laufräder oder der Raupenfahrwerke sowie die Durchmesser der Tiefenführungselemente sowie die Länge der Säelemente sowie deren Abstand zueinander derartig ausgelegt sind bzw. sein können, dass diese in einer übereinander angeordneten Transportposition ein Maß aufweisen, welches kleiner oder gleich etwa vier Metern ist.

Es sei angemerkt, dass anstelle von Säelementen auch andere Bodenbearbeitungswerkzeuge wie Scheibenwerkzeuge oder Zinkenwerkzeuge verwendet werden könnten, welche jedoch ebenso unter dem Sammelbegriff der Säelemente definiert werden.

Demnach kann zusätzlich dem Zentralrahmen in dessen vorderem Bereich und wiederum jeweils quer zur Fahrtrichtung in regelmäßigen Abständen zueinander eine Mehrzahl von Spurlockerungselementen in Form von Lockerungsscheiben zugeordnet sein. Der Zweck dieser Scheiben kann es sein, die durch ein Zugfahrzeug in die Bodenoberfläche gezogenen Spuren wieder zu beseitigen und den somit rückverfestigten Ackerboden zusätzlich zu lockern, um somit wiederum möglichst die gleichen Bedingungen für die nachfolgenden Säelemente zu erzeugen. Neben Lockerungsscheiben wären auch andere Spurlockerungselemente denkbar, bspw. Zinkenwerkzeuge oder dergl. Darüber hinaus können auch die Spurlockerungselemente höhenverstellbar bspw. mittels eines Einstellorgans am Zentralrahmen oder an einem separaten Rahmenelement angebracht sein.

Zusätzlich können am Seitenrahmen Verteilertürme angebaut sein, mittels derer jeweils das Verteilgut in die Mehrzahl von Säelementen aufgeteilt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
Fig. 1 eine perspektivische Ansicht einer Ausführungsvariante eines mit der Erfindung definierten gezogenen landwirtschaftlichen Arbeitsgerätes in einer Arbeitsposition;
Fig. 2 eine Seitenansicht des gezogenen landwirtschaftlichen Arbeitsgerätes gemäß Fig. 1 in Arbeitsposition und mit ausgeblendetem Laufrad;
Fig. 3 eine Seitenansicht des gezogenen landwirtschaftlichen Arbeitsgerätes gemäß Fig. 1 und Fig. 2 mit verschwenktem Seitenrahmen bzw. in einer Vorgewendeposition; und
Fig. 4 eine Seitenansicht des gezogenen landwirtschaftlichen Arbeitsgerätes gemäß Fig. 1, Fig. 2 und Fig. 3 in einer Transportposition und mit übereinander angeordnetem Laufwerk und Tiefenführungselement und Seitenrahmen und Säelementen.

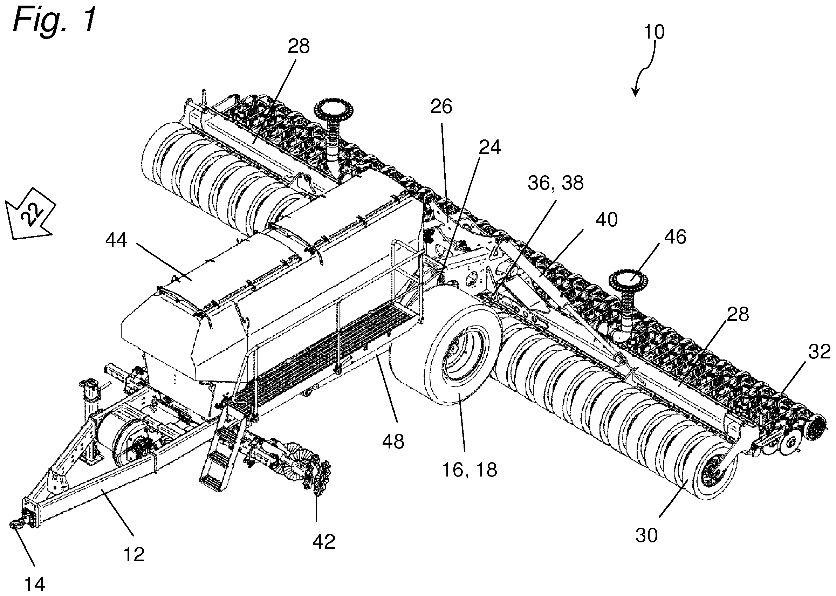

Für gleiche oder gleich wirkende Elemente der Erfindung werden in den Figuren 1 bis 4 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße landwirtschaftliche Arbeitsgerät ausgestaltet sein kann und stellen keine abschließende Begrenzung dar.

Das gezogene landwirtschaftliche Arbeitsgerät 10 gemäß den Figuren 1 bis 4 ist als Arbeitsgerät mit einer großen Arbeitsbreite ausgebildet. Das Arbeitsgerät 10 weist einen Zentralrahmen 12 auf, der auf seiner Vorderseite eine Zugvorrichtung 14 bzw. eine Zugöse zur Ankupplung an eine Anhängevorrichtung eines hier nicht dargestellten Zugfahrzeuges aufweist. Auf der Rückseite weist der Zentralrahmen 12 ein sich über dem Boden abrollendes bzw. abstützendes Laufwerk 16 in Form von Laufrädern 18 auf, wobei als Laufwerk auch sog. Raupenfahrwerke verwendet werden könnten.

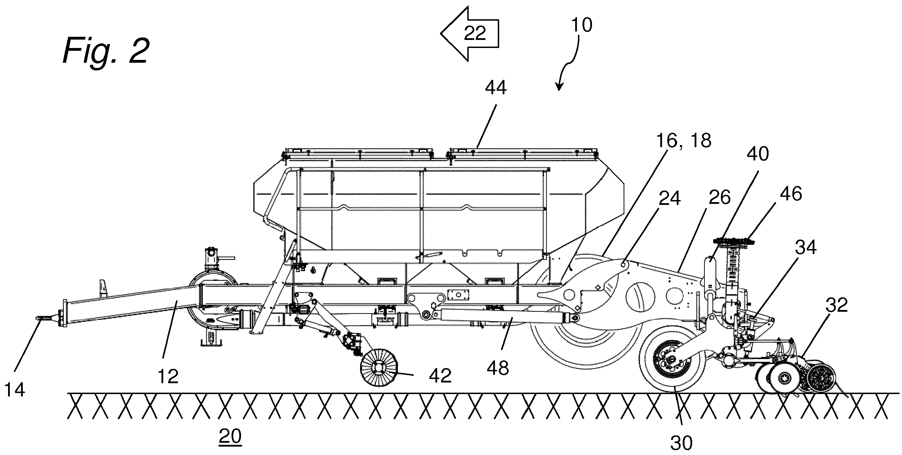

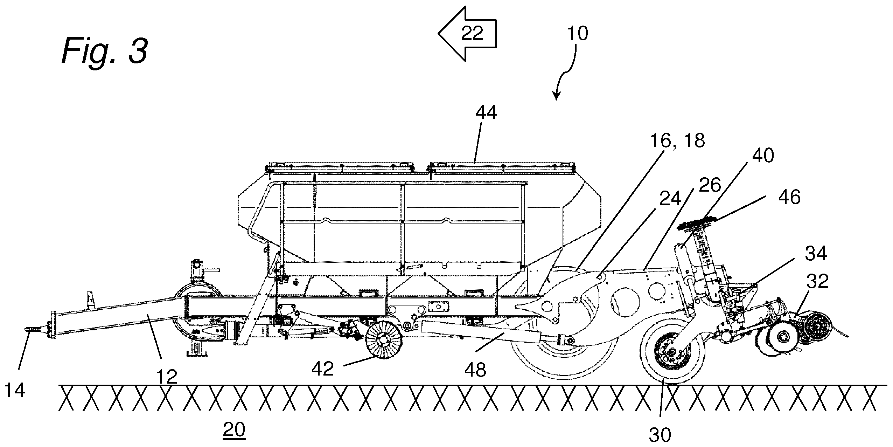

Wie aus den Figuren 2 bis 4 zu sehen ist, sind die Laufräder 18 bzw. ist das Laufwerk 16 nur während einer Transportposition mit einer Bodenoberfläche 20 in Kontakt, wohingegen bei einer Arbeits- und Vorgewendeposition kein Kontakt mit einer Bodenoberfläche 20 herrscht (vergl. Figuren 2 und 3).

Auf der Rückseite des Zentralrahmens 12 ist über eine quer zur Fahrtrichtung 22 orientierte Drehachse 24 ein Schwenkrahmen 26 angeordnet, wobei wiederum seitlich des Schwenkrahmens 26 sich quer zur Fahrtrichtung 22 erstreckende Seitenrahmen 28 angeordnet sind. An den Seitenrahmen 28 sind über die gesamte Breite in regelmäßigen Abständen zueinander Tiefenführungselemente 30 in Form von Tiefenführungsrädern bzw. in Form einer Tiefenführungswalze und Säelemente 32 angeordnet, wobei die Tiefenführungselemente 30 vor und die Säelemente 32 hinter dem Seitenrahmen 28 nachgeordnet sind. Zudem sind die Tiefenführungselemente 30 gegenüber dem Seitenrahmen 28 nicht höhenverstellbar, während die Säelemente 32 über eine Gelenkanordnung höhenverstellbar zum Seitenrahmen 28 angeordnet sind. Die Höhenverstellung erfolgt mittels als Hydraulikzylinder ausgebildeten Einstellorganen 34; wahlweise könnten auch oder nur die Tiefenführungselemente 30 gegenüber dem Seitenrahmen höhenverstellbar angebracht sein.

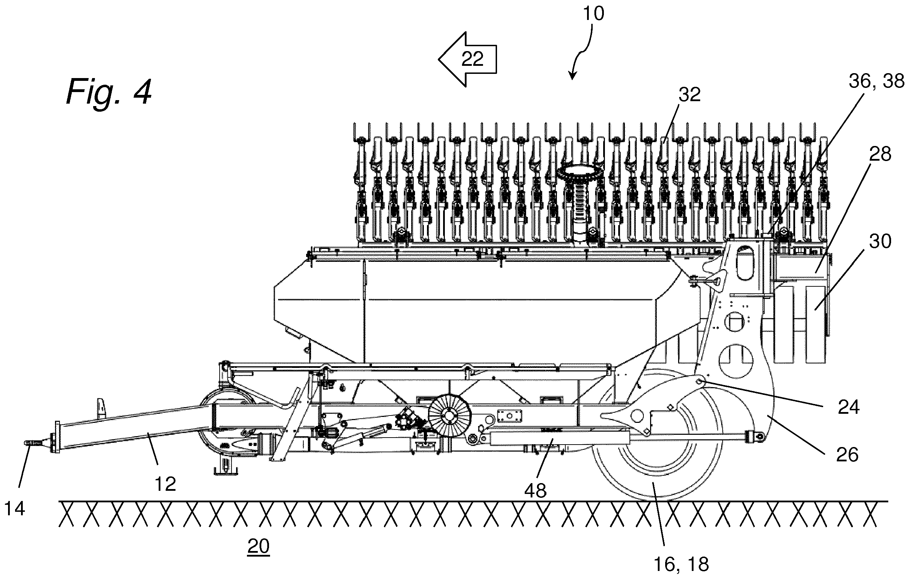

Die beiden Seitenrahmen 28 sind jeweils über einen Schwenkrahmen 26 mittels Drehachsen 24 an dem Zentralrahmen 12 angeordnet, wobei sich die Drehachsen 24 jeweils im vorderen Bereich der Seitenrahmen 28 befinden und sich horizontal und quer zur Fahrtrichtung 22 erstrecken. Um diese Drehachsen 24 kann der Schwenkrahmen bzw. die Seitenrahmen aus der in den Figuren 1 bis 3 dargestellten Arbeitsstellung um etwa 90° nach oben in die in der Fig. 4 dargestellten Transportposition überführt werden.

Weiterhin sind die Seitenrahmen 28 mit Hilfe des Schwenkrahmens 26 mittels Gelenken 36 deren Gelenkachsen 38 in Arbeitsposition in Fahrtrichtung 22 und in der um 90° nach oben geschwenkten Stellung aufrecht und/oder senkrecht verlaufend am Zentralrahmen 12 befestigt. Somit können die Seitenrahmen 28 jeweils um eine sich etwa in ihrem Endbereich befindende Gelenkachse 38, die in der um 90° nach oben verschwenkten Stellung der Seitenrahmen 28 aufrecht verläuft, um 90° nach vorn in eine parallel zur Fahrtrichtung 22 verlaufende Position verschwenkt werden. Anstelle des nach vorne Verschwenkens ist es auch möglich, die Seitenrahmen 28 nach hinten zu verschwenken. Das Verschwenken der Seitenrahmen 28 erfolgt mittels eines als Hydraulikzylinder ausgebildeten Linearelements. Auch können die Säelemente 32 mittels der Einstellorgane 34 in eine für die Transportfahrt erforderliche Position überführt werden.

Zusätzlich ist dem Zentralrahmen 12 in dessen vorderem Bereich und wiederum jeweils quer zur Fahrtrichtung 22 in regelmäßigen Abständen zueinander eine Mehrzahl von Spurlockerungselementen 42 in Form von Lockerungsscheiben zugeordnet. Der Zweck dieser Scheiben ist es, evtl. die durch ein Zugfahrzeug in die Bodenoberfläche gezogenen Spuren wieder zu beseitigen und den somit rückverfestigten Ackerboden zusätzlich zu lockern, um somit wiederum möglichst die gleichen Bedingungen für die nachfolgenden Säelemente 32 zu erzeugen. Neben Lockerungsscheiben wären auch andere Spurlockerungselemente 42 denkbar, bspw. Zinkenwerkzeuge oder dergl. Darüber hinaus können auch die Spurlockerungselemente 42 wiederum höhenverstellbar bspw. mittels eines Einstellorgans am Zentralrahmen 12 oder an einem separaten Rahmenelement angebracht sein.

Zudem kann am Zentralrahmen 12 zum Mitführen und Bereitstellen des jeweiligen Verteilguts (Dünger, Saatgut etc.) ein Vorratsbehälter 44 angebaut sein, wobei sich dieser in der Transportposition zwischen den Seitenrahmen 28 erstreckt (vergl. Fig. 4). Zudem sind am Seitenrahmen ebenso Verteilertürme 46 angebaut, mittels derer jeweils das Verteilgut in die Mehrzahl von Säelementen aufgeteilt wird.

Das Verschwenken des Schwenkrahmens 26 bzw. der Seitenrahmen 28 erfolgt mittels zumindest eines diesen/diesem zugeordneten motorischen Stellmittels 48, welches zum einen am Zentralrahmen 12 und zum anderen am Schwenkrahmen 26 angebaut ist. Das Stellmittel ist im Ausführungsbeispiel als hydraulischer Zylinder ausgeführt; es wäre jedoch auch denkbar pneumatische und/oder elektrisch betriebene Elemente zu verwenden. Insbesondere können als Stellmittel 48 bzw. als Stellglieder Linearelemente oder Spindeltriebe oder dergl. verwendet werden. Auch können bspw. hydraulische oder pneumatische Stellmittel 48 verwendet werden, welche von einer elektrischen Steuerung oder einem elektrisch betätigten Ventil angesteuert werden.

Mittels des Stellmittels 48 wird der Schwenkrahmen jeweils um die quer zur Fahrrichtung orientierte Drehachse 24 derartig verschwenkt, dass in einer Arbeitsposition sowohl die Tiefenführungselemente 30 als auch die diesem nachgeordneten Säelemente 32 mit einer Bodenoberfläche 20 in Kontakt stehen, die Tiefenführung und die Abstützung somit also mittels der Tiefenführungselemente 30 erfolgt (vergl. Fig. 2), wohingegen die Laufräder 18 keinen Bodenkontakt aufweisen. Außerdem kann dadurch erreicht werden, dass in einer ausgehobenen Vorgewendeposition lediglich die Tiefenführungselemente 30 mit einer Bodenoberfläche in Kontakt stehen, somit die Abstützung lediglich mittels der Tiefenführungselemente 30 erfolgt (vergl. Fig. 3).

Zudem wird damit erreicht, dass in einer Transportposition lediglich die Laufräder 18 des Laufwerks 16 in Bodenkontakt stehen (vergl. Fig. 4), somit also die Abstützung des Arbeitsgerätes lediglich mittels der Laufräder 18 bzw. mittels des Laufwerks 16 erfolgt.

Um trotz einer großen Arbeitsbreite des Arbeitsgerätes 10 und trotz der über die gesamten Arbeitsbreite angeordneten Tiefenführungselemente 30 und Säelemente 32 dennoch die für eine Transportfahrt maximal zulässige Transporthöhe von vier Metern nicht zu überschreiten, sind die Durchmesser der Laufräder 18 bzw. des Laufwerks sowie die Durchmesser der Tiefenführungselemente 30 sowie die Länge der Säelemente 32 sowie deren Abstand zueinander derartig aufeinander abgestimmt, dass diese in einer übereinander angeordneten Transportposition ein Maß aufweisen, welches kleiner oder gleich vier Metern ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Arbeitsgerät, landwirtschaftliches Arbeitsgerät
- 12: Zentralrahmen
- 14: Zugvorrichtung
- 16: Laufwerk
- 18: Laufrad
- 20: Bodenoberfläche
- 22: Fahrtrichtung
- 24: Drehachse
- 26: Schwenkrahmen
- 28: Seitenrahmen
- 30: Tiefenführungselement
- 32: Säelement
- 34: Einstellorgan
- 36: Gelenk
- 38: Gelenkachse
- 40: Linearelement
- 42: Spurlockerungselement
- 44: Vorratsbehälter
- 46: Verteilerturm
- 48: Stellmittel

## Patentansprüche

1. Gezogenes landwirtschaftliches Arbeitsgerät (10), insbesondere Bodenbearbeitungs- und/oder Sägerät, mit einem ein Laufwerk (16) und eine Zugvorrichtung (14) aufweisenden Zentralrahmen (12), an welchem im hinteren Bereich ein Schwenkrahmen (26) und sich seitlich zu diesem erstreckende Seitenrahmen (28) angebracht sind, wobei an den Seitenrahmen (28) über die gesamte Breite in regelmäßigen Abständen zueinander angeordnete bzw. sich erstreckende Tiefenführungselemente (30) und Säelemente (32) angebracht sind, wobei der Schwenkrahmen (26) und die sich seitlich zu diesem erstreckenden Seitenrahmen (28) gegenüber dem Zentralrahmen (12) um eine sich quer zu einer Fahrtrichtung (22) erstreckende Drehachse (24) mittels zumindest eines Stellmittels (48) nach oben verschwenkbar sind, und wobei die Seitenrahmen (28) jeweils um eine sich etwa in ihrem Endbereich befindende Gelenkachse (38), die in der nach oben verschwenkten Stellung des Schwenkrahmens (26) aufrecht verläuft, nach vorne oder hinten in eine in Fahrtrichtung (22) verlaufende Position verschwenkbar sind,
wobei das Arbeitsgerät derart ausgebildet ist, dass in einer Arbeits- und/oder Vorgewendeposition der Schwenkrahmen (26) mittels des wenigstens einen Stellantriebes derartig verschwenkt bzw. verschwenkbar ist, dass eine Tiefenführung und eine Abstützung des Arbeitsgerätes (10) ausschließlich mittels der Tiefenführungselemente (30) erfolgt, und dass in einer Transportposition der Schwenkrahmen (26) mittels des wenigstens einen Stellmittels (48) derartig verschwenkt bzw. verschwenkbar ist, dass eine Abstützung des Arbeitsgeräts (10) lediglich über das Laufwerk (16) erfolgt.

2. Arbeitsgerät nach Anspruch 1, **dadurch gekennzeichnet, dass** Tiefenführungselemente (30) und Säelemente (32) jeweils nur an den Seitenrahmen (28) vorhanden sind.

3. Arbeitsgerät nach Anspruch 1, **dadurch gekennzeichnet, dass** die Tiefenführungselemente (30) in ihrer jeweiligen Höhe nicht verstellbar, insbesondere starr, zum Seitenrahmen (28) angeordnet sind.

4. Arbeitsgerät nach einem der vorhergehenden Ansprüche, **dadurch gekennzeichnet, dass** die Tiefenführungselemente (30) als Packerwalze und/oder Ackerwalze ausgeführt sind, die sich jeweils einteilig oder mehrteilig entlang der gesamten Länge eines Seitenrahmens (28) erstrecken.

5. Arbeitsgerät nach Anspruch 4, dessen die Tiefenführungselemente (30) bildende Packerwalze und/oder Ackerwalze durch eine Mehrzahl von mit ihren Drehachsen in etwa fluchtenden und jeweils in definiertem Abstand voneinander angeordneten und drehbar gelagerten Rädern gebildet ist/sind.

6. Arbeitsgerät nach Anspruch 5, bei dem zumindest einigen Rädern, insbesondere jedem Rad der Packerwalze oder Ackerwalze mit insbesondere darauf aufgezogenem Luftreifen mindestens ein Säelement (32) folgt.

7. Arbeitsgerät nach Anspruch 5 oder 6, bei dem zumindest einigen Rädern, insbesondere jedem Rad der Packerwalze oder Ackerwalze jeweils zwei Säelemente (32) folgen.

8. Arbeitsgerät nach Anspruch 7, bei dem zwei Säelemente (32), die jeweils einem Rad der Packerwalze oder Ackerwalze folgen, jeweils in etwa einem linken bzw. rechten Randbereich des Rades mit darauf insbesondere aufgezogenem Luftreifen zugeordnet sind bzw. folgen.

9. Arbeitsgerät nach einem der Ansprüche 1 bis 8, **dadurch gekennzeichnet**, das die Durchmesser des Laufwerks (18) sowie die Durchmesser der Tiefenführungselemente (30) sowie die Länge der Säelemente (32) sowie deren Abstand zueinander derartig ausgelegt sind, dass diese in einer geklappten und übereinander angeordneten Transportposition ein Maß aufweisen, das eine Länge von vier Metern nicht übersteigt.

10. Arbeitsgerät nach einem der Ansprüche 1 bis 9, **dadurch gekennzeichnet, dass** zur Erfassung der jeweils vorhandenen Position des Schwenkrahmens (26) Messmittel vorhanden sind.

11. Arbeitsgerät nach Anspruch 10, **dadurch gekennzeichnet, dass** eine Ansteuerung des zumindest einen Stellmittels (48) auf Basis der aktuellen Schwenkposition des Schwenkrahmens (26) erfolgt.

## Claims

1. A towed agricultural implement (10), in particular a tillage implement and/or sowing implement, with a central frame (12) having a carriage (16) and a towing device (14), to which central frame (12) a swivel frame (26) and side frames (28) extending laterally thereto are mounted in the rear area of the central frame (12), wherein depth control elements (30) and sowing elements (32) disposed or, as applicable, extending along the entire width at regular distances to each other are mounted to the side frames (28), wherein the swivel frame (26) and the side frames (28) extending laterally thereto are swivelable upward in relation to the central frame (12) about an axis of rotation (24) extending transversely to a driving direction (22) by means of at least one actuating means (48), and wherein the side frames (28) are each swivelable frontward or backward into a position running in driving direction (22) about a joint axle (38), which is located approximately in the end areas of the side frames (28) and which runs upright when the swivel frame (26) is in the upward-swivelled position,
wherein the implement is designed such that he swivel frame (26) is swivelled or, as applicable, swivelable when in a working position and/or headland position by means of the at least one actuator in such a manner that a depth control and a support of the implement (10) are carried out exclusively by means of the depth control elements (30), and such that the swivel frame (26) is swivelled or, as applicable, swivelable when in a transport position by means of the at least one actuating means (48) in such a manner that a support of the implement (10) is carried out solely by the carriage (16).

2. The implement according to claim 1, **characterised in that** depth control elements (30) and sowing elements (32) are in each case present only at the side frames (28).

3. The implement according to claim 1, **characterised in that** the depth control elements (30) are disposed in relation to the side frame (28) in each case to be non-adjustable in their height, in particular to be rigid.

4. The implement according to one of the previous claims, **characterised in that** the depth control elements (30) are designed as packer roller and/or field roller extending in each case in one piece or in multiple pieces along the entire length of a side frame (28).

5. The implement according to claim 4, with the implement's packer roller and/or field roller that forms/form the depth control elements (30) being formed by a plurality of rotatably mounted wheels with their axes of rotation approximately flush aligned and in each case disposed at a defined distance from each other.

6. The implement according to claim 5, in which at least some wheels, in particular each wheel of the packer roller or field roller with, in particular, a pneumatic tyre mounted thereon, is followed by at least one sowing element (32).

7. The implement according to claim 5 or 6, in which at least some wheels, in particular each wheel of the packer roller or field roller is in each instance followed by two sowing elements (32).

8. The implement according to claim 7, in which two sowing elements (32), which each follow a wheel of the packer roller or field roller, are in each case assigned to or, as applicable, follow approximately a left or, as applicable, right edge section of the wheel with, in particular, a pneumatic tyre mounted thereon.

9. The implement according to one of the claims 1 to 8, **characterised in that** the diameters of the carriage (18) as well as the diameters of the depth control elements (30) as well as the length of the sowing elements (32) as well as their distance to one another are designed such that, when folded and disposed on top of each other in a transport position, they have a dimension that does not exceed a length of four metres.

10. The implement according to one of the claims 1 to 9, **characterised in that** measuring means are present for the detection of the in each case present position of the swivel frame (26).

11. The implement according to claim 10, **characterised in that** a control of the at least one actuating means (48) is carried out based on the current swivelling position of the swivel frame (26).

## Revendications

1. Outil de travail agricole (10) tracté, notamment outil de travail du sol et/ou semoir, doté d'un châssis central (12) présentant un train de roulement (16) et un dispositif de traction (14), auquel sont montés, à l'arrière, un cadre pivotant (26) et des cadres latéraux (28) s'étendant latéralement par rapport à celui-ci, des éléments de guidage en profondeur (30) et des éléments semoir, qui sont agencés voire qui s'étendent à intervalles réguliers les uns des autres sur toute la largeur, étant montés sur les cadres latéraux (28), le cadre pivotant (26) et les cadres latéraux (28) qui s'étendent latéralement par rapport à celui-ci pouvant être basculés vers le haut, par rapport au cadre central (12), dans un axe de rotation (24) à la transversale d'un sens de marche (22), à l'aide d'au moins un actionneur (48) et les cadres latéraux (28) pouvant être chacun basculés dans un axe d'articulation (38) situé environ à leur extrémité, lequel axe est en position debout lorsque le cadre pivotant (26) est dans la position de pivotement vers le haut, vers l'avant ou vers l'arrière dans une position dirigée dans le sens de marche (22),
ledit outil de travail étant réalisé de sorte que dans une position de travail et/ou de tournière, le cadre pivotant (26) est basculé voire peut être basculé à l'aide dudit au moins un actionneur de sorte que l'outil de travail (10) est guidé en profondeur et appuyé exclusivement à l'aide des éléments de guidage en profondeur (30), et que dans une position de transport, le cadre pivotant (26) est basculé ou peut être basculé à l'aide dudit au moins un actionneur (48) de sorte qu'un appui de l'outil de travail (10) n'est réalisé que par le biais du train de roulement (16).

2. Outil de travail selon la revendication 1, **caractérisé en ce qu'**il n'y a des éléments de guidage en profondeur (30) et des éléments semoir (32) respectivement qu'au niveau des cadres latéraux (28).

3. Outil de travail selon la revendication 1, **caractérisé en ce que** les éléments de guidage en profondeur (30) sont agencés à leur hauteur respective de manière non ajustable, notamment fixe par rapport au cadre latéral (28).

4. Outil de travail selon l'une quelconque des revendications précédentes, **caractérisé en ce que** les éléments de guidage en profondeur (30) sont réalisés en tant que rouleaux de compactage et/ou rouleaux agricoles qui s'étendent chacun d'un seul tenant ou en plusieurs parties le long de toute la longueur d'un cadre latéral (28).

5. Outil de travail selon la revendication 4, dont le rouleau de compactage et/ou le rouleau agricole formant les éléments de guidage en profondeur (30) sont formés par une pluralité de roues approximativement dans le prolongement de leur axes de rotation, agencées chacune à une distance définie l'une de l'autre et montées en rotation.

6. Outil de travail selon la revendication 5, dans lequel au moins certaines des roues, notamment chacune des roues des rouleaux de compactage ou agricoles, dotées notamment de pneumatiques montés dessus, sont suivies d'au moins un élément semoir (32).

7. Outil de travail selon la revendication 5 ou 6, dans lequel au moins certaines des roues, notamment chacune des roues des rouleaux de compactage ou agricoles sont suivies respectivement de deux éléments semoir (32).

8. Outil de travail selon la revendication 7, dans lequel deux éléments semoir (32) qui suivent respectivement une roue des rouleaux de compactage ou agricoles, sont associés à ou suivent environ une zone périphérique gauche ou droite de la roue sur laquelle est monté notamment un pneumatique.

9. Outil de travail selon l'une quelconque des revendications 1 à 8, **caractérisé en ce que** les diamètres du train de roulement (18) ainsi que les diamètres des éléments de guidage en profondeur (30) ainsi que la longueur des éléments semoir (32) ainsi que leur espacement les uns par rapport aux autres sont configurés de sorte que ceux-ci présentent, dans une position de transport repliée et agencés les uns sur les autres, une dimension qui ne dépasse pas une longueur de quatre mètres.

10. Outil de travail selon l'une quelconque des revendications 1 à 9, **caractérisé en ce qu'**il y a des moyens de mesure pour détecter la position respective effective du cadre pivotant (26).

11. Outil de travail selon la revendication 10, **caractérisé en ce qu'**une commande dudit au moins un actionneur (48) s'effectue sur la base de la position de pivotement actuelle du cadre pivotant (26).
